# NEUE EUROPÄISCHE PATENTSCHRIFT

(11) **EP 0 279 939 B2**
(45) Veröffentlichungstag und Bekanntmachung des Hinweises auf die Entscheidung über den Einspruch: **22.01.1997**
(45) Hinweis auf die Patenterteilung: 22.05.1991
(21) Anmeldenummer: 87118599.7
(22) Anmeldetag: 15.12.1987
(51) Int. Cl.: F24D 19/10, G05D 7/06

(54) **Verfahren zum Einstellen der Förderleistung einer Umwälzpumpe**
Method for adjusting the feed volume of a circulation pump
Méthode de contrôle du débit d'une pompe de circulation

(30) Priorität: 29.01.1987 DE 3702569
(43) Veröffentlichungstag der Anmeldung: 31.08.1988
(73) Patentinhaber: Hennel, Ewald, D-30419 Hannover (DE)
(72) Erfinder: Hennel, Ewald, D-30419 Hannover (DE)
(74) Vertreter: Döring, Roger, Dipl.-Ing.

(56) Entgegenhaltungen:
- DE-A- 2 946 049
- DE-A- 3 143 081
- DE-A- 3 230 058
- DE-A- 3 508 049
- DE-C- 3 211 814
- PATENT ABSTRACTS OF JAPAN, Band 11, Nr. 50 (M-562)(2497), 17. Februar 1987; & JP - A - 61 213 422 (SANYO ELECTRIC) 22.09.1986 (Kat. A)
- TECHNISCHE RUNDSCHAU, Band 76, Nr. 24, Juni 1984, Seite 29, Bern, CH; M. PORNITZ: "Mikroprozessoren senken Stromverbrauch von Zirkulationspumpen"
- Fink, W.: STUFENLOSE DREHZAHLVERSTELLUNG VON PUMPEN ERLAUBT WEITERE REGELMETHODEN, Maschinenmarkt Nr. 28, 08.04.82, Vogel Verlag, Würzburg
- Bonfig, K.W., Prof. Dr. Ing., TECHNISCHE DURCHFLUSSMESSUNG, 1. Auflage, 1977, Vulkan Verlag, Essen

## Beschreibung

Die Erfindung bezieht sich auf ein Verfahren zum Einstellen der Förderleistung einer durch einen Elektromotor mit veränderbarer Drehzahl antreibbaren, im Rohrsystem einer Warmwasser-Heizungsanlage angeordneten Umwälzpumpe, mit welcher das von einem Heizkessel kommende Wasser durch in unterschiedlichen Räumen der Heizungsanlage befindliche Verbraucher gepumpt und über ein Rücklaufrohr zurück zum Heizkessel bewegt wird, bei welchem an einer Stelle im Rohrsystem ein die Strömungsgeschwindigkeit des Wassers erfassendes Meßgerät angebracht wird, das eine der Strömungsgeschwindigkeit proportionale und damit der vorgegebenen Rohrnetzkennlinie entsprechende elektrische Spannung liefert, die einem mit dem Elektromotor verbundenen Regler als Eingangsgröße zugeführt wird, durch dessen Ausgangsgröße die Drehzahl des Elektromotors veränderbar ist (DE-OS 35 08 049).

Heizungsanlagen gibt es in den unterschiedlichsten Größenordnungen. Sie sind beispielsweise in Einfamilienhäusern, in Mietshäusern, in großen Bürohäusern oder auch bei Firmen mit einer Vielzahl von Gebäuden installiert. In Abhängigkeit von der Größe der Heizungsanlage, die im wesentlichen von der Anzahl der Verbraucher bestimmt wird, ist die benötigte Pumpenleistung zu bemessen. So reicht in vielen Fällen eine einzige Umwälzpumpe aus. Bei größeren Anlagen werden eine Hauptpumpe und zusätzliche Pumpen für einzelne Heizkreise eingesetzt. Die maximale Förderleistung wird stets so bemessen, daß alle in einer Anlage befindlichen Verbraucher auch dann ausreichend versorgt werden können, wenn sie gleichzeitig eingeschaltet sind. "Verbraucher" sind dabei beispielsweise Heizkörper, Flächenheizungen, Wärmetauscher oder Klimaanlagen.

Die volle Pumpenleistung wird nur dann benötigt, wenn alle Verbraucher oder zumindest der größte Teil derselben eingeschaltet sind. In den Zeiten - beispielsweise nachts oder in der wärmeren Jahreszeit -, in denen nur ein Teil der Verbraucher eingeschaltet ist, kann die Pumpenleistung vermindert werden. Das gilt auch, wenn der von den Verbrauchern benötigte Bedarf beispielsweise über Thermostatventile gedrosselt wird. Wenn die Pumpe in diesen Fällen mit voller Leistung weiter fördert, kann es zu störenden Strömungsgeräuschen im Rohrsystem der Heizungsanlage kommen. Außerdem hat die Pumpe dabei durchgehend den maximalen Energiebedarf mit entsprechend hohen Stromkosten.

Es sind daher Umwälzpumpen auf dem Markt erhältlich, deren Elektromotor in Stufen mit unterschiedlichen Drehzahlen angetrieben werden kann. Die Umschaltung kann mit entsprechenden Umschaltern von Hand oder auch automatisch mittels eines Zeitglieds, wie einer Schaltuhr, durchgeführt werden. In beiden Fällen wird die Umschaltung nach Erfahrungswerten zeitabhängig vorgenommen. Eine Anpassung an die tatsächlich benötigte Förderleistung ist nicht möglich. So kann bei den bekannten Verfahren bzw. Anordnungen beispielsweise nicht erfaßt werden, wenn während der Vollastzeit eine größere Anzahl von Verbrauchern abgeschaltet oder während der Zeit mit verminderter Pumpenleistung eine größere Anzahl von Verbrauchern zugeschaltet wird. Insbesondere im zweiten Fall kann das sehr stören, da der Wärmebedarf insgesamt dann nicht befriedigt werden kann.

In der DE-Z "Technische Rundschau", Band 76, Nr. 24, Juni 1984, Seite 29 ist ein Verfahren zum Regeln von Zirkulationspumpen von Heizungsanlagen beschrieben. Zur Beseitigung einer Überdimensionierung der Pumpe wird danach deren Drehzahl auf eine Höchstdrehzahl begrenzt. Gleichzeitig wird eine Mindestdrehzahl vorgegeben. Zwischen diesen beiden, die Pumpenleistung begrenzenden Drehzahlen und den zugehörigen Kennlinien des Rohrnetzes für Vollast und Teillast wird die Pumpe geregelt. Als Führungsgröße wird dazu die Druckdifferenz verwendet, die konstant bleiben soll. Wie die Praxis zeigt, ist es physikalisch nicht richtig, den Druck an der Pumpe über die Druckdifferenz konstant halten zu wollen. Die Proportionalitätsgesetze erfordern auch im gedrosselten System, daß durch eine Regelung eine quadratische Beziehung zwischen der Pumpendrehzahl und dem Druck im versorgten System erreicht wird. Das ist bei diesem bekannten System nicht gegeben, da hier der Druck zwischen zwei Betriebspunkten konstant gehalten wird. Als Folge davon pendelt die Drehzahl der Pumpe ständig zwischen den beiden Betriebspunkten hin und her. Geräusche in der Heizungsanlage, insbesondere durch Wasserschläge, sind bei dieser Regelung nicht zu vermeiden. Hinzu kommt, daß einerseits durch die Begrenzung der Pumpendrehzahl nach oben eine Unterversorgung der Verbraucher insbesondere bei Vollast nicht zu vermeiden ist. Auf der anderen Seite ist durch die vorgegebene Mindestdrehzahl die Regelung dann nicht mehr wirksam, wenn die Teillast weiter absinkt. Die Druckdifferenz steigt dann an, eine Regelung ist aber nicht mehr möglich, da die minimale Drehzahl der Pumpe festgelegt ist. Als Folge davon steigt der Druck im Heizungssystem an, es findet eine überversorgung der eingeschalteten Verbraucher statt und es werden in verstärktem Maße Geräusche verursacht.

Mit dem bekannten Verfahren nach der eingangs erwähnten DE-OS 35 08 049 ist eine automatische Anpassung der Pumpenleistung an den jeweiligen Betriebszustand sichergestellt. Die Pumpenleistung wird bei diesem Verfahren nach Maßgabe der Strömungsgeschwindigkeit des Wassers im Rücklaufrohr verändert. Zum Antrieb der Umwälzpumpe wird ein Elektromotor verwendet, der stufenweise auf mindestens zwei unterschiedliche Drehzahlen umschaltbar ist. Dieses Verfahren hat sich in der Praxis bewährt. Es erfordert jedoch für die Umschaltung auf die unterschiedlichen Drehzahlstufen einigen schaltungstechnischen Aufwand. Außerdem ist mit diesem Verfahren eine kontinuierliche Anpassung der Förderleistung der Umwälzpumpe nicht möglich.

Der Erfindung liegt die Aufgabe zugrunde, ein Verfahren anzugeben, mit dem bei geringem schaltungstechnischen Aufwand eine kontinuierliche Anpassung der Förderleistung der Umwälzpumpe einer Heizungsanlage an den Warmwasserbedarf möglich ist und mit dem weiterhin eine ausreichende Versorgung aller Verbraucher der Heizungsanlage bei allen Betriebszuständen sichergestellt ist.

Diese Aufgabe wird mit dem Verfahren der eingangs geschilderten Art gemäß der Erfindung dadurch gelöst,
- daß zum Antrieb der Umwälzpumpe ein Elektromotor mit stufenlos regelbarer Drehzahl verwendet wird,
- daß die vom Regler gelieferten Spannungswerte bei jeder Strömungsgeschwindigkeit des Wassers höher sind als die Spannungswerte der Rohrnetzkennlinie und
- daß der Abstand zwischen den vom Regler gelieferten Spannungswerten und den Spannungswerten der Rohrnetzkennlinie bei niedriger Strömungsgeschwindigkeit größer ist als bei hoher Strömungsgeschwindigkeit.

Durch die Verwendung eines stufenlos drehzahlregelbaren Elektromotors als Antrieb für die Umwälzpumpe ist eine kontinuierliche Anpassung der Förderleistung derselben an den jeweiligen Betriebszustand der Heizungsanlage gegeben. Der Regler regelt die Drehzahl des Elektromotors nach Maßgabe der vorher berechneten Rohrnetzkennlinie, welche den Gegebenheiten der Heizungsanlage entspricht. Damit bei jedem Betriebszustand der Heizungsanlage eine ausreichende Versorgung mit Warmwasser sichergestellt ist, werden vom Regler Spannungswerte geliefert, die über den Spannungswerten der Rohrnetzkennlinie liegen. Im unter- en Spannungsbereich, d.h. bei niedriger Strömungsgeschwindigkeit im Rohrsystem, würde die Umwälzpumpe mit niedriger Drehzahl und entsprechend niedriger Leistung arbeiten, da aufgrund der niedrigen Strömungsgeschwindigkeit keine höhere Leistung erforderlich ist. Wenn dann durch Einschalten zusätzlicher Verbraucher schnell eine erhöhte Leistung benötigt wird, könnte es geschehen, daß die Umwälzpumpe nur sehr langsam und im Extremfall gar nicht hochläuft, weil die Strömungsgeschwindigkeit im Rohrsystem nur unwesentlich zunimmt. Diese Gefahr besteht beim vorliegenden Verfahren nicht, da der Regler in diesem kritischen Bereich höhere Spannungswerte liefert. Der Umwälzpumpe wird also ein gegenüber der tatsächlichen Strömungsgeschwindigkeit höherer Wert vorgetäuscht, so daß sie auch bei geringer Strömungsgeschwindigkeit ihre Leistung nicht zu weit erniedrigt. Beim Einschalten zusätzlicher Verbraucher steigt daher die Strömungsgeschwindigkeit sofort an und die Umwälzpumpe stellt sich schnell auf die geforderte Leistung ein.

Vorteilhafte Ausgestaltungen daher Erfindung gehen aus den Unteransprüchen hervor.

Das Verfahren nach der Erfindung wird an Hand der Zeichnungen als Ausführungsbeispiel erläutert. In diesem Ausführungsbeispiel ist das Meßgerät im Rücklaufrohr angeordnet. Das ist für die Wirksamkeit der Vorrichtung die günstigste Stelle. Es kann aber beispielsweise auch im Vorlaufrohr angeordnet sein.

Es zeigen:
Fig. 1 in schematischer Darstellung eine Heizungsanlage, die mit dem Verfahren nach der Erfindung betrieben wird.
Fig. 2 und 3 Diagramme zur Durchführung des Verfahrens mit analogem Regelbetrieb.
Fig. 4 und 5 Diagramme zur Durchführung des Verfahrens mit einem von einem Rechner gesteuerten Regler.

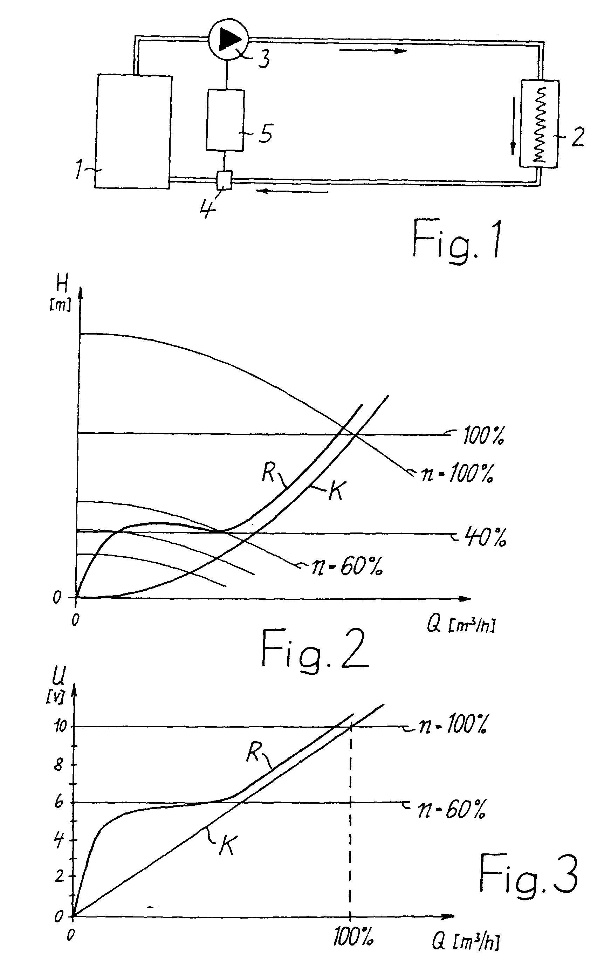

Mit 1 ist ein in einem beliebigen Gebäude aufgestellter Heizkessel bezeichnet, an den über ein Rohrsystem im Gebäude angeordnete Verbraucher angeschlossen sind. Stellvertretend für eine beliebige Anzahl von Verbrauchern ist in Fig. 1 ein Verbraucher 2 eingezeichnet. Das Wasser der Warmwasser-Heizungsanlage wird entsprechend den eingezeichneten Pfeilen mittels einer Umwälzpumpe 3 - im folgenden kurz als "Pumpe" bezeichnet - über den Verbraucher 2 zurück zum Heizkessel 1 geführt. Die Pumpe 3 wird von einem drehzahlgeregelten Elektromotor angetrieben, dessen Drehzahl stufenlos regelbar ist.

Im Rücklaufrohr der Heizungsanlage ist ein Meßgerät 4 angeordnet, das die Strömungsgeschwindigkeit des zurückströmenden Wassers erfaßt und eine proportionale elektrische Gleichspannung liefert. Solche Meßgeräte sind bekannt. Sie arbeiten beispielsweise mittels Ultraschalls. Das Meßgerät 4 kann beispielsweise eine Gleichspannung bis zu 10 V liefern, die der maximalen Strömungsgeschwindigkeit des Wassers im Rücklaufrohr entspricht, wenn alle Verbraucher 2 der Heizungsanlage voll eingeschaltet sind. Die Wassermenge entspricht dabei 100 %. Wenn die Wassermenge und damit auch die Strömungsgeschwindigkeit um 10 % zurückgeht, dann sinkt auch die vom Meßgerät 4 gelieferte Gleichspannung um 10 %, also um 1 V.

An das Meßgerät 4 ist ein Regler 5 angeschlossen. der auf der anderen Seite mit der Pumpe 3 bzw. mit deren Elektromotor verbunden ist. Zwischen dem Regler 5 und dem Elektromotor kann ein an sich bekannter Frequenz-Umrichter eingeschaltet sein, über den in Abhängigkeit von der vom Regler 5 gelieferten Spannung die Drehzahl des Elektromotors geregelt wird.

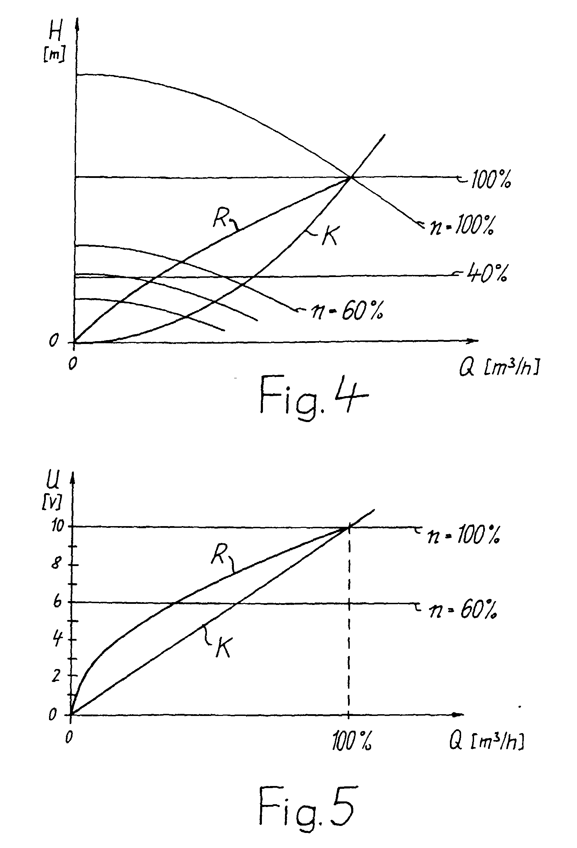

Die Heizungsanlage hat eine Rohrnetzkennlinie K, wie sie beispielsweise aus den Fig. 2 und 4 hervorgeht. Die Rohrnetzkennlinie K ist bekannt. Ihr Verlauf richtet sich nach der Größe bzw. Leistung der Pumpe 3, die nach den Gegebenheiten der Heizungsanlage - Größe, Anzahl der Verbraucher - dimensioniert ist. Die Rohrnetzkennlinie K bzw. die derselben entsprechenden Spannungswerte nach den Fig. 3 und 5 werden dem Regler 5 aufgegeben. Die Pumpe 3 fördert in Abhängigkeit von ihrer Drehzahl n entsprechend der Rohrnetzkennlinie K eine bestimmte Wassermenge Q bis zu einer gegebenen Förderhöhe H (Fig. 2). Die jeweilige Drehzahl n der Pumpe 3 entspricht dabei einer Spannung U. Im gewählten Ausführungsbeispiel soll die maximale vom Regler 5 gelieferte Spannung U 10 V betragen. Sie entspricht der maximalen Drehzahl der Pumpe 3, also n = 100 %. Diese Drehzahl (Leistung) der Pumpe 3 wird benötigt, wenn alle oder nahezu alle Verbraucher 2 der Heizungsanlage eingeschaltet sind, also mit warmem Wasser versorgt werden müssen. Die Strömungsgeschwindigkeit des Wassers im Rücklaufrohr der Heizungsanlage ist dann sehr hoch, so daß das Meßgerät 4 die maximale Spannung von U = 10 V liefert.

Wird in der Heizungsanlage der größte Teil der Verbraucher 2 abgeschaltet, dann sinkt die Strömungsgeschwindigkeit des Wassers im Rücklaufrohr. Die vom Meßgerät 4 gelieferte Spannung sinkt dann beispielsweise auf 1 V, wodurch die Drehzahl der Pumpe 3 auf 10 % der maximalen Drehzahl zurückgeht (Fig. 3). Die Pumpe 3 liegt dann nahezu im etwa waagerechten Bereich der Rohrnetzkennlinie K (Fig. 2).

Wenn bei diesem Betriebszustand der Heizungsanlage wieder einige Verbraucher 2 eingeschaltet werden, dann steigt zwar die Strömungsgeschwindigkeit des Wassers im Rücklaufrohr geringfügig an. Dieser Anstieg reicht jedoch in vielen Fällen, insbesondere bei großen Heizungsanlagen, nicht aus, um die Pumpe 3 auf die erforderliche Drehzahl (Leistung) zu bringen.

Dieser Nachteil wird dem Verfahren nach der Erfindung wie folgt behoben:

Der Regler 5 liefert an seinem Ausgang Spannungswerte, die über den Spannungswerten der Rohrnetzkennlinie K liegen. Es ergibt sich dadurch eine Kennlinie R (Fig. 2 und 3), die oberhalb der Rohrnetzkennlinie K liegt. Durch den Regler 5 werden damit auch im unteren Spannungsbereich Spannungswerte vorgegeben, mit denen der Pumpe 3 eine höhere Strömungsgeschwindigkeit vorgetäuscht wird, als sie tatsächlich vorhanden ist. Die Drehzahl (Leistung) der Pumpe 3 sinkt dadurch nie auf einen zu kleinen Wert ab. Wenn - ausgehend von sehr niedriger Strömungsgeschwindigkeit mit wenigen Verbrauchern - andere Verbraucher zugeschaltet werden, kann die dadurch geforderte erhöhte Leistung der Pumpe 3 also sofort erbracht werden.

Das Verfahren ist mit der Kennlinie R auch dann erfolgreich, wenn die Pumpe 3 einmal ganz stillgelegt wird. Infolge des relativ schnellen Anstiegs der Kennlinie R läuft die Pumpe 3 bei Einschalten von Verbraucher 2 sicher und sofort hoch.

Der Abstand der Kennlinien K und R voneinander soll im unteren Spannungsbereich auf jeden Fall deutlich größer als bei höheren Spannungen sein. Er wird insbesondere im unteren Spannungsbereich relativ groß gewählt, so wie es aus den Fig. 2 und 3 hervorgeht. Die Kennlinie R kann dabei etwa bei 40 % bis 50 % der Drehzahl n in einen nahezu waagerechten Ast übergehen, so daß die Drehzahl der Pumpe 3 auch bei kleinen Strömungsgeschwindigkeiten nie unter 40 % bis 50 % des Maximalwerts absinkt. Auf diese Weise ist die ausreichende Versorgung aller Verbraucher 2 bei jedem Betriebszustand der Heizungsanlage sichergestellt.

Die Fig. 2 und 3 zeigen einen möglichen Verlauf der Kennlinien R, bei dem bei etwa 40 % der Leistung bzw. Förderhöhe H die Leistung oder Drehzahl der Pumpe 3 etwa konstant bleibt. Die Kennlinien R haben dabei einen steilen Anstieg, von O beginnend. Ein besseres Regelverhalten mit zusätzlicher Energieeinsparung ergibt sich bei einem Verlauf der Kennlinien nach den Fig. 4 und 5. Der Anstieg ist hier nicht so steil und der Kennlinienverlauf ist gleichförmiger. Die Kennlinien der Fig. 4 und 5 lassen sich sehr einfach einhalten, wenn als Regler 5 ein mit einem Mikroprozessor ausgerüsteter Rechner eingesetzt wird. Es ist heute aber auch möglich, den Kennlinienverlauf nach den Fig. 4 und 5 mit einem Analogregler zu fahren. Die Kennlinie R liegt in allen Fällen über der Rohrnetzkennlinie K, und zwar im unteren Spannungsbereich recht deutlich.

Wie bereits erwähnt, wird das Meßgerät 4 am zweckmäßigsten im Rücklaufrohr des Rohrsystems einer Heizungsanlage angeordnet. An dieser Stelle ist die Strömung des Wassers am gleichmäßigsten und auch die Temperaturschwankungen sind hier am geringsten. Die erhaltenen Meßwerte sind daher besonders genau.

Bei Heizungsanlagen, deren Verbraucher 2 mit Thermostatventilen ausgerüstet sind und die mit einer automatischen Nachtabsenkung arbeiten, ist es zweckmäßig, die Leistung der Pumpe 3 während der Dauer der Nachtabsenkung zu begrenzen. Das kann ebenfalls vom Regler 5 vorgenommen werden, der während der Nachtabsenkung beispielsweise als obere Grenze Spannungswerte liefert, die 40 % bis 50 % der maximalen Spannung betragen.

## Patentansprüche

1. Verfahren zum Einstellen der Förderleistung einer durch einen Elektromotor mit veränderbarer Drehzahl antreibbaren, im Rohrsystem einer Warmwasser-Heizungsanlage angeordneten Umwälzpumpe, mit welcher das von einem Heizkessel kommende Wasser durch in unterschiedlichen Räumen der Heizungsanlage befindliche Verbraucher gepumpt und über ein Rücklaufrohr zurück zum Heizkessel bewegt wird, bei welchem an einer Stelle im Rohrsystem ein die Strömungsgeschwindigkeit des Wassers erfassendes Meßgerät (4) angebracht wird, das eine der Strömungsgeschwindigkeit proportionale und damit der vorgegebenen Rohrnetzkennlinie (K) entsprechende elektrische Spannung liefert, die einem mit dem Elektromotor verbundenen Regler (5) als Eingangsgröße zugeführt wird, durch dessen Ausgangsgröße die Drehzahl des Elektromotors veränderbar ist, dadurch gekennzeichnet,
- daß zum Antrieb der Umwälzpumpe (3) ein Elektromotor mit stufenlos regelbarer Drehzahl verwendet wird,
- daß die vom Regler (5) gelieferten Spannungswerte bei jeder Strömungsgeschwindigkeit des Wassers höher sind als die Spannungswerten der Rohrnetzkennlinie (K) und
- daß der Abstand zwischen den vom Regler (5) gelieferten Spannungswerten und den Spannungswerten der Rohrnetzkennlinie (K) bei niedriger Strömungsgeschwindigkeit größer ist als bei hoher Strömungsgeschwindigkeit.

2. Verfahren nach Anspruch 1, dadurch gekennzeichnet, daß die vom Regler (5) gelieferten Spannungswerte bei niedrigen Strömungsgeschwindigkeiten auf einem nahezu konstanten Wert von etwa 50 % der maximalen Spannung gehalten werden.

3. Verfahren nach einem der Ansprüche 1 oder 2, dadurch gekennzeichnet, daß als Regler (5) ein mit einem Mikroprozessor ausgerüsteter Rechner verwendet wird.

4. Verfahren nach einem der Ansprüche 1 bis 3, dadurch gekennzeichnet, daß bei einer Heizungsanlage mit Thermostatventilen an den Verbrauchern (2) und automatischer Nachtabsenkung die Drehzahl der Umwälzpumpe (3) während der Nachtabsenkung begrenzt wird.

## Claims

1. A method of adjusting the delivery of a circulating pump which can be driven by a variable-speed electric motor and is disposed in the pipe system of a hot-water heating installation, and with which the water coming from a boiler is pumped through utilization devices in various rooms of the heating installation and is moved back to the boiler through a return pipe, wherein a measuring instrument (4) detecting the rate of flow of the water is fitted in the pipe system and delivers an electrical voltage which is proportional to the rate of flow, which corresponds to the given characteristic curve (K) of the pipe system and which is supplied as input variable to a controller (5) which is connected to the electric motor and by means of the output quantity of which the speed of the electric motor is variable, characterised in that
- an electric motor with infinitely variable speed is used to drive the circulating pump (3),
- at every rate of flow of the water, the voltage values delivered by the controller (5) are higher than the voltage values of the characteristic curve (K) and
- that the difference between the voltage values delivered by the controller (5) and the voltage values of the characteristic curve (K) is greater at a lower rate of flow than at a higher rate of flow.

2. A method according to Claim 1, characterised in that at low rates of flow, the voltage values delivered by the controller (5) are kept at an almost constant value of about 50 % of the maximum voltage.

3. A method according to Claim 1 or 2, characterised in that a computer equipped with a microprocessor is used as a controller (5).

4. A method according to any one of Claims 1 to 3, characterised in that in a heating installation with thermostatic valves at the utilization devices (2) and automatic lowering at night, the speed of the circulating pump (3) is limited during the lowering at night.

## Revendications

1. Procédé de réglage de la capacité de refoulement d'une pompe de circulation entraînée par un moteur électrique à vitesse variable, montée dans la tuyauterie d'une installation de chauffage à eau chaude, par laquelle l'eau provenant d'une chaudière est pompée par des recepteurs se trouvant dans différents locaux de l'installation de chauffage, et renvoyée à la chaudière par une conduite de retour, pour laquelle un appareil de mesure (4) , enregistrant la vitesse d'écoulement de l'eau, est placé dans la tuyauterie, lequel appareil fournit une tension électrique proportionelle à la vitesse d'écoulement, qui correspond à la courbe caractéristique (K) donnée de la tuyauterie et qui est envoyée comme grandeur d'entrée à un régulateur (5) relié au moteur électrique, la grandeur de sortie dudit régulateur permettant de faire varier la vitesse du moteur électrique, caractérisé en ce que
- pour entraîner la pompe de circulation (3), on utilise un moteur électrique à vitesse réglable en continu,
- les valeurs de tension fournies par le régulateur (5) sont supérieures pour chaque vitesse d'écoulement de l'eau aux valeurs de tension de la courbe caractéristique (K) et en ce que
- l'écart entre les valeurs de tension fournies par le régulateur (5) et les valeurs de tension de la courbe caractéristique (K) est plus élevée lorsque la vitesse d'écoulement est faible que lorsqu'elle est élevée.

2. Procédé selon la revendication 1, caractérisé en ce que les valeurs de tension fournies par le régulateur (5) pour les vitesses d'écoulement faibles sent maintenues à une valeur à peu près constante égale à environ 50 % de la tension maximale.

3. Procédé selon la revendication 1 ou 2, caractérisé en ce que l'on utilise comme régulateur (5) un ordinateur équipé d'un microprocesseur.

4. Procédé selon l'une des revendications 1 à 3, caractérisé en ce que pour une installation de chauffage comportant des vannes à thermostat sur les récepteurs (2) et une baisse automatique de nuit, la vitesse de rotation de la pompe de circulation (3) est limitée pendant la baisse de nuit.
